# EUROPÄISCHE PATENTSCHRIFT

(11) **EP 0 818 572 B1**
(45) Veröffentlichungstag und Bekanntmachung des Hinweises auf die Patenterteilung: **02.04.2003**
(21) Anmeldenummer: 97106864.8
(22) Anmeldetag: 25.04.1997
(51) Int. Cl.: D21F 3/02

(54) **Presswalze und Verfahren zum Betrieb einer Presswalze**
Press roll and method for its operation
Rouleau de presse et procédé pour son utilisation

(30) Priorität: 02.07.1996 DE 19626634
(43) Veröffentlichungstag der Anmeldung: 14.01.1998
(73) Patentinhaber: Voith Paper Patent GmbH, 89522 Heidenheim (DE)
(72) Erfinder: Schiel, Christian, 89520 Heidenheim (DE); Schuwerk, Wolfgang, 88353 Kisslegg (DE); Grabscheid, Joachim, Dr., 89547 Heuchlingen (DE); Hasenfuss, Rudolf, 89542 Herbrechtingen (DE)

(56) Entgegenhaltungen:
- DE-A- 3 311 996
- DE-A- 3 336 462
- DE-U- 8 812 031

## Beschreibung

Die vorliegende Erfindung betrifft eine Preßwalze nach dem Oberbegriff des Anspruchs 9 und ein Verfahren zum Betrieb einer Preßwalze nach dem Oberbegriff des Anspruchs 1. Eine derartige Preßwalze und ein solches Verfahren zum Betrieb einer Preßwalze sind beispiels weise aus DE-A-33 11 996 und DE 88 12 031 U bekannt.

Bei Schuhpressen, die mit Preßwalzen der genannten Art arbeiten, tritt aufgrund des hohen Anpreßdrucks eine hauptsächlich durch viskose Reibung zwischen Walzenmantel und Preßschuh erzeugte starke Erwärmung auf, die zu einer Belastung des Walzenmantels führt. Durch die Erwärmung wird darüber hinaus die Viskosität und damit die Schmierfähigkeit des Schmiermittels herabgesetzt. Außerdem wird durch die Erwärmung des Schmiermittels dessen Gebrauchsdauer verringert, so daß es früher ausgetauscht werden muß.

Der Erfindung liegt die Aufgabe zugrunde, eine Preßwalze und ein Verfahren zum Betrieb einer Preßwalze anzugeben, durch welche ein zuverlässiger Betrieb der Schuhpresse sowie eine lange Haltbarkeit des Mantels der Preßwalze und des verwendeten Schmiermittels erreicht werden.

Diese Aufgabe wird durch ein Verfahren mit den Merkmalen des Anspruchs 1 gelöst.

Ebenso wird die Aufgabe durch eine Preßwalze mit den Merkmalen des Anspruchs 9 gelöst.

Erfindungsgemäß wird also das zur Schmierung des Stützbereichs zwischen Preßschuh und Innenfläche des Walzenmantels verwendete Schmiermittel zugleich gezielt zur Kühlung des Walzenmantels eingesetzt. Dies geschieht dadurch, daß ein so hoher Durchfluß an Schmiermittel vorgesehen wird, daß das Schmiermittel eine ausreichend große Wärmemenge abtransportiert, um die Temperatur des Walzenmantels trotz hohen Arbeitsdrucks und hoher Arbeitsgeschwindigkeit nicht über einen zulässigen Grenzwert ansteigen zu lassen.

Durch diese Maßnahme wird nicht nur bei heute üblichen Schuhpressen, die eine maximale Betriebsgeschwindigkeit bis zu 1200 m/min aufweisen, ein zuverlässiger Betrieb, eine lange Mantelhaltbarkeit und eine lange Gebrauchsdauer des Schmiermittels gewährleistet, sondern es wird auch eine Erhöhung der maximalen Arbeitsgeschwindigkeit von Schuhpressen ermöglicht. Durch die erfindungsgemäßen Maßnahmen können Schuhpressen nun bspw. auch in graphischen Papiermaschinen eingesetzt werden, die Arbeitsgeschwindigkeiten bis zu 2200 m/min aufweisen. Durch den hohen Durchsatz an Schmiermittel wird auch bei derart schnellaufenden Schuhpressen die anfallende große Wärmemenge so weit abtransportiert, daß sowohl das Schmiermittel als auch der Walzenmantel auf einer niedrigen Temperatur gehalten werden können.

Die Zufuhr der zur ausreichenden Kühlung erforderlichen Schmiermittelmenge kann durch Aufsprühen auf die Innenseite des Walzenmantels erfolgen. Das aufgesprühte Schmiermittel verteilt sich auf dem Walzenmantel und wird durch die Rotation des Walzenmantels in den Stützbereich gezogen. Zwar kann bei einer großen erforderlichen Schmiermittelmenge diese unter Umständen nicht vollständig durch den Stützbereich gezogen werden. Der gewünschte Kühleffekt stellt sich aber trotzdem ein, da sich das durch den Stützbereich laufende Schmiermittel mit dem übrigen Schmiermittel vermischt und daher vor dem erneuten Durchgang durch den Stützbereich entsprechend der Gesamtmenge an Schmiermittel abgekühlt wird. Unabhängig von der durch den Stützbereich gezogenen Schmiermittelmenge hängt die über das Schmiermittel abgeführte Wärmemenge also von dessen Gesamtmenge ab, die entsprechend den Bedürfnissen gewählt werden kann.

Bevorzugt wird das Schmiermittel in der Nähe der Walzenmantelaustrittsseite des Stützbereiches auf die Innenseite des Walzenmantels aufgesprüht. Das durch den Stützbereich gezogene und dabei erhitzte Schmiermittel vermischt sich so unmittelbar nach dem Austreten aus dem Stützbereich mit dem aufgesprühten Schmiermittel, so daß nahezu die gesamte Umlaufzeit des Walzenmantels für einen Temperaturausgleich zwischen erhitztem und frisch aufgesprühtem Schmiermittel zur Verfügung steht. Es wird dadurch sichergestellt, daß das Schmiermittel vor dem erneuten Eintritt in den Stützbereich eine ausreichende Abkühlung erfährt.

Zusätzlich zu dem Aufsprühen von Schmiermittel auf die Innenseite des Walzenmantels, und grundsätzlich auch alternativ hierzu, kann das Schmiermittel dem Stützbereich durch Einpressen über den Preßschuh zugeführt werden. Hierdurch kann insbesondere die durch den Stützbereich laufende Schmiermittelmenge in gewünschtem Maße erhöht werden.

Erfindungsgemäß ist vorgesehen, pro Meter Arbeitsbreite und pro 1 m/sec maximaler Betriebsgeschwindigkeit der Preßwalze zwischen 3 und 5 l Schmiermittel pro Minute zuzuführen. Ein solcher Durchsatz an Schmiermittel gewährleistet auch bei hohen Arbeitsgeschwindigkeiten der Preßwalze eine ausreichende Kühlung.

Die Temperatur des Schmiermittels vor der Zufuhr beträgt nach einer weiteren Ausgestaltung der Erfindung bevorzugt maximal ca. 50°C. Dies gewährleistet eine niedrige Temperatur des Walzenmantels, ohne daß der erforderliche Durchsatz an Schmiermittel zur Kühlung zu hoch wird.

Um dies zu erreichen, kann vor der Zufuhr des Schmiermittels eine Kühlung des Schmiermittels vorgenommen werden. Durch die Kühlung wird dabei sichergestellt, daß auch bei starker Erwärmung des Stützbereichs eine ausreichende Wärmeabfuhr erfolgt.

Das Schmiermittel wird so gewählt, daß das Produkt aus dessen dynamischer Viskosität η bei der Zufuhr und der maximalen Betriebsgeschwindigkeit vₘₐₓ der Preßwalze 1,3 bis 2,3 Pa·m (=N/m) beträgt. Hierdurch ist eine ausreichende Schmierung des Stützbereichs gewährleistet und wird eine zu große Wärmeentstehung aufgrund viskoser Reibung verhindert.

Nach einer weiteren Ausgestaltung der Erfindung wird überschüssiges Schmiermittel vor dem Stützbereich abgeführt und bevorzugt zur Bildung eines geschlossenen Schmiermittelkreislaufs rückgeführt. Hierdurch wird ein Teil des Schmiermittels, insbesondere der Teil, der nicht durch den Stützbereich gezogen wird, abgeführt. Dieser abgeführte Teil des Schmiermittels kann dann gereinigt und konditioniert, insbesondere gekühlt werden, um diese Schmiermittelmenge dem System erneut zuzuführen, also auf die Innenseite des Walzenmantels aufzusprühen oder in den Stützbereich einzupressen. Die hohe Menge an Schmiermittel kann so im Kreislauf geführt werden und muß erst nach entsprechender Alterung entsorgt und ersetzt werden.

Ein Ausführungsbeispiel der erfindungsgemäßen Preßwalze ist in der Zeichnung dargestellt und wird nachfolgend beschrieben. Es zeigt, in schematischer Darstellung,

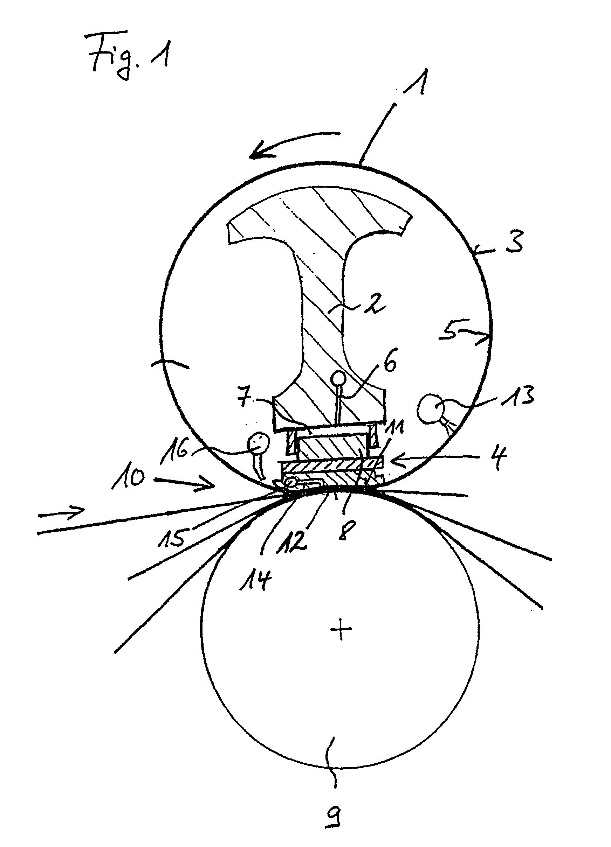

- Fig. 1: einen Querschnitt durch eine erfindungsgemäße Preßwalze mit Gegenwalze.

Die Preßwalze 1 umfaßt einen stationären Träger 2 und einen um den Träger 2 umlaufenden flexiblen Walzenmantel 3, der über einen Preßschuh 4 am Träger 2 abgestützt ist. Der Preßschuh 4 ist hydraulisch gegen die Innenumfangsfläche 5 des Walzenmantels 3 anpreßbar. Hierfür weist der Träger 2 einen Druckölzuführkanal 6 und einen Druckraum 7 auf, in welchen der Preßschuh 4 mit einem rückwärtigen Abschnitt 8 dichtend eintaucht. Auf diese Weise wird der Walzenmantel 3 durch den Preßschuh 4 gegen eine Gegenwalze 9 gepreßt, die zusammen mit der Preßwalze 1 einen Preßspalt 10 bildet.

Zur Schmierung des Stützbereichs 11 zwischen der Innenumfangsfläche 5 des Walzenmantels 3 und der zugewandten Stützfläche 12 des Preßschuhs 4 ist in der Nähe der Walzenmantelaustrittsseite des Stützbereichs 11 eine Sprühvorrichtung 13 vorgesehen, welche auf hier nicht dargestellte Weise mit Schmiermittel versorgt wird. Das über die Sprühvorrichtung 13 aufgesprühte Schmiermittel verteilt sich über die Innenumfangsfläche 5 des Walzenmantels 3 und wird mit diesem zur Walzenmanteleintrittsseite des Stützbereichs 11 transportiert. Dort wird das Schmiermittel in den Stützbereich 11 gezogen.

Zusätzlich weist der Preßschuh 4 mindestens einen Schmiermittelkanal 14 auf, der einerseits mit einem Schmiermittelzufuhrkanal 15 verbunden ist und andererseits in der Stützfläche 12 des Preßschuhs 4 mündet. Hier kann der Schmiermittelkanal 14 trichterförmig erweitert sein. Der Schmiermittelzufuhrkanal 15 ist durch nicht dargestellte Mittel mit der Schmiermittelversorgung verbunden.

Beim Betrieb der Preßwalze 1 wird einerseits das über die Vorrichtung 13 aufgesprühte Schmiermittel in den Stützbereich 11 gezogen und andererseits über den Schmiermittelkanal 14 in den Stützbereich 11 gepreßt. Auf diese Weise wird zwischen der Stützfläche 12 des Preßschuhs 4 und der Innenumfangsfläche 5 des Walzenmantels 3 ein Schmierfilm erzeugt, der die Reibung zwischen Preßschuh 4 und Walzenmantel 3 herabsetzt.

Auf der Walzenmanteleintrittsseite des Preßschuhs 4 ist eine Absaugvorrichtung 16 für überschüssiges, nicht in den Stützbereich 11 gezogenes Schmiermittel angeordnet. Das durch die Vorrichtung 16 abgesaugte Schmiermittel wird auf nicht dargestellte Weise abgeführt und bevorzugt nach Reinigung und Konditionierung erneut in den Stützbereich 11 eingebracht. Für das rückgeführte Schmiermittel kann eine Kühleinrichtung vorgesehen sein, durch welche das Schmiermittel auf eine gewünschte Temperatur, beispielsweise ca. 50°C gekühlt wird, bevor es erneut auf die Innenumfangsfläche 5 des Walzenmantels 3 aufgesprüht oder in den Stützbereich 11 eingepreßt wird.

Die insgesamt zugeführte Schmiermittelmenge ist erfindungsgemäß so groß gewählt, daß durch das Schmiermittel eine Wärmemenge abtransportiert wird, die gewährleistet, daß die Temperatur des Walzenmantels 3 einen zulässigen Grenzwert nicht überschreitet. Insbesondere beträgt die zugeführte Schmiermittelmenge pro Meter Arbeitsbreite und pro 1 m/sec maximaler Betriebsgeschwindigkeit der Preßwalze 1 zwischen ca. 3 und 5 l/min. Das Schmiermittel selbst ist so gewählt, daß das Produkt aus dessen dynamischer Viskosität η und der maximalen Betriebsgeschwindigkeit vₘₐₓ der Preßwalze 1 ca. 1,3 bis 2,3 Pa·m oder auch N/m beträgt. Die Viskosität η ist hierbei auf den Zustand des Schmiermittels vor der Zufuhr, also vor dem Aufsprühen oder Einpressen bezogen, insbesondere also auf dessen Temperatur vor der Zufuhr.

Durch den Durchsatz einer solchen Gesamtmenge an Schmiermittel der genannten Art und Eintrittstemperatur in der Preßwalze 1 ist es möglich, auch bei Schuhpressen für graphische Papiermaschinen mit Arbeitsgeschwindigkeiten bis zu 2200 m/min eine ausreichende Kühlung zu erzielen. Dies gewährleistet neben einem zuverlässigen Betrieb der Schuhpresse eine lange Haltbarkeit des Walzenmantels und eine lange Gebrauchsdauer des verwendeten Schmiermittels.

### Bezugszeichenliste

- 1: Preßwalze
- 2: Träger
- 3: Walzenmantel
- 4: Preßschuh
- 5: Innenumfangsfläche von 3
- 6: Druckölkanal
- 7: Druckraum
- 8: Teil von 4
- 9: Gegenwalze
- 10: Preßspalt
- 11: Stützbereich
- 12: Stützfläche
- 13: Sprühvorrichtung
- 14: Schmiermittelkanal
- 15: Schmiermittelzufuhrkanal
- 16: Absaugeinrichtung

## Patentansprüche

1. Verfahren zum Betrieb einer Preßwalze (1) mit einem stationären Träger (2) und einem um den Träger (2) umlaufenden flexiblen Walzenmantel (3), der über einen gegen die Innenumfangsfläche (5) des Walzenmantels (3) anpreßbaren, eine Stützfläche (12) aufweisenden Preßschuh (4) abgestützt ist, bei welchem einem Stützbereich (11) zwischen Stützfläche (12) und Innenumfangsfläche (5) des Walzenmantels (3) ein fluidförmiges Schmiermittel zur Verringerung der Reibung zwischen Preßschuh (4) und Walzenmantel (3) zugeführt wird, wobei eine der Preßwalze zugeführte Gesamtmenge an Schmiermittel so groß gewählt wird, daß die Temperatur des Walzenmantels (3) aufgrund der an das Schmiermittel abgegebenen und vom Schmiermittel abtransportierten Wärmemenge einen zulässigen Grenzwert nicht überschreitet,
**dadurch gekennzeichnet,**
**dass** pro Meter Arbeitsbreite und pro 1m/sec maximaler Betriebsgeschwindigkeit der Preßwalze (1) zwischen 3 und 5 I Schmiermittel pro Minute zugeführt werden, und das Schmiermittel so gewählt wird, dass das Produkt aus dessen dynamischer Viskosität η vor der Zufuhr und einer maximalen Betriebsgeschwindigkeit Vₘₐₓ der Preßwalze (1) 1,3 bis 2,3 Pa • m beträgt.

2. Verfahren nach Anspruch 1,
**dadurch gekennzeichnet,**
**dass** die Zufuhr der erforderlichen Schmiermittelmenge zumindest auch durch Aufbringen, insbesondere Aufsprühen, auf die Innenumfangsfläche (5) des Walzenmantels (3) erfolgt.

3. Verfahren nach Anspruch 2,
**dadurch gekennzeichnet,**
**dass** das Aufbringen in der Nähe der Walzenmantelaustrittsseite des Stützbereichs (11) erfolgt.

4. Verfahren nach einem der vorhergehenden Ansprüche,
**dadurch gekennzeichnet,**
**dass** die Zufuhr der erforderlichen Schmiermittelmenge zumindest auch durch Einpressen in den Stützbereich (11) zwischen Stützfläche (12) des Preßschuhs (4) und Innenumfangsfläche (5) des Walzenmantels (3) über den Preßschuh (4) erfolgt.

5. Verfahren nach einem der vorhergehenden Ansprüche,
**dadurch gekennzeichnet,**
**dass** die Temperatur des Schmiermittels vor der Zufuhr maximal ca. 50°C beträgt.

6. Verfahren nach einem der vorhergehenden Ansprüche,
**dadurch gekennzeichnet,**
**dass** das Schmiermittel vor der Zufuhr gekühlt wird.

7. Verfahren nach einem der vorhergehenden Ansprüche,
**dadurch gekennzeichnet,**
**dass** überschüssiges Schmiermittel vor dem Stützbereich (11) abgeführt wird.

8. Verfahren nach Anspruch 7,
**dadurch gekennzeichnet,**
**dass** das abgeführte Schmiermittel zur Bildung eines geschlossenen Schmiermittelkreislaufs rückgeführt wird.

9. Preßwalze (1) mit einem stationären Träger (2) und einem um den Träger (2) umlaufenden flexiblen Walzenmantel (3), der über einen gegen die Innenumfangsfläche (5) des Walzenmantels (3) anpreßbaren, eine Stützfläche (12) aufweisenden Preßschuh (4) abgestützt ist, bei welchem einem Stützbereich (11) zwischen Stützfläche (12) und Innenumfangsfläche (5) des Walzenmantels (3) ein fluidförmiges Schmiermittel zur Verringerung der Reibung zwischen Preßschuh (4) und Walzenmantel (3) zugeführt wird, wobei Mittel vorhanden sind, durch welche der Preßwalze (1) eine Menge an fluidförmigem Schmiermittel zuführbar ist, die eine solche Wärmemenge aufnimmt und abtransportiert, daß die Temperatur des Walzenmantels (3) einen zulässigen Grenzwert nicht übersteigt, zur Durchführung des Verfahrens nach einem der vorhergehenden Ansprüche,
**dadurch gekennzeichnet,**
**dass** im Preßschuh (4) Zuführkanäle (14,15) für Schmiermittel vorgesehen sind und/oder eine Sprühvorrichtung (13) vorgesehen ist, durch welche Schmiermittel auf die Innenumfangsfläche (5) des Walzenmantels (3) aufsprühbar ist, und dass pro Meter Arbeitsbreite und pro 1m/sec maximaler Betriebsgeschwindigkeit der Preßwalze (1) zwischen 3 und 5 l Schmiermittel pro Minute zuführbar sind, und das Schmiermittel so gewählt ist, dass das Produkt aus dessen dynamischer Viskosität η vor der Zufuhr und einer maximalen Betriebsgeschwindigkeit Vₘₐₓ der Preßwalze (1) 1,3 bis 2, 3 Pa·m beträgt

10. Preßwalze nach Anspruch 9,
**dadurch gekennzeichnet,**
**dass** die Sprühvorrichtung (13) in der Nähe der Walzenmantelaustrittsseite des Stützbereichs (11) angeordnet ist.

11. Preßwalze nach Anspruch 9 oder 10,
**dadurch gekennzeichnet,**
**dass** vor der Walzenmanteteintrittsseite des Stützbereichs (11) eine Absaugvorrichtung (16) für überschüssiges Schmiermittel mündet.

12. Preßwalze nach einem der Ansprüche 9 bis 11,
**dadurch gekennzeichnet,**
**dass** Mittel zur Rückführung des abgesaugten Schmiermittels in den Schmiermittelkreislauf vorgesehen sind.

13. Preßwalze nach Anspruch 12,
**dadurch gekennzeichnet,**
**dass** im Schmiermittelkreislauf eine Kühleinrichtung für das Schmiermittel vorhanden ist.

14. Preßwalze nach Anspruch 13,
**dadurch gekennzeichnet,**
**dass** die Kühleinrichtung eine Kühlung des Schmiermittels auf maximal 50°C ermöglicht.

## Claims

1. Method of operating a press roll (1) having a stationary support (2) and a flexible roll cover (3) which runs around the support (2) and which is supported by a press shoe (4) which can be pressed against the inner circumferential surface (5) of the roll cover (3) and has a supporting surface (12), in which a supporting area (11) between supporting surface (12) and inner circumferential surface (5) of the roll cover (3) is fed with a fluid lubricant to reduce the friction between press shoe (4) and roll cover (3), the total amount of lubricant fed to the press roll being selected to be so high that the temperature of the roll cover (3) does not exceed a permissible limiting value owing to the quantity of heat given up to the lubricant and transported away by the lubricant,
**characterized in that** for each meter of working width and for each 1 m/sec maximum operating speed, between 3 and 5 l of lubricant per minute are fed to the press roll (1), and the lubricant is selected such that the product of its dynamic viscosity η before the feed at a maximum operating speed Vₘₐₓ of the press roll (1) is 1.3 to 2.3 Pa·m.

2. Method according to Claim 1, **characterized in that** the feed of the requisite quantity of lubricant is at least also carried out by means of application, in particular spraying on, to the inner circumferential surface (5) of the roll cover (3).

3. Method according to Claim 2, **characterized in that** the application is carried out in the vicinity of the roll-cover outlet side from the supporting area (11).

4. Method according to one of the preceding claims, **characterized in that** the feed of the requisite quantity of lubricant is at least also carried out by means of pressing into the supporting area (11) between supporting surface (12) of the press shoe (4) and inner circumferential surface (5) of the roll cover (3) via the press shoe (4).

5. Method according to one of the preceding claims, **characterized in that** the temperature of the lubricant before being fed in is at most about 50°C.

6. Method according to one of the preceding claims, **characterized in that** the lubricant is cooled before being fed in.

7. Method according to one of the preceding claims, **characterized in that** excess lubricant is carried away upstream of the supporting area (11).

8. Method according to Claim 7, **characterized in that** the lubricant carried away is led back to form a closed lubricant circuit.

9. Press roll (1) having a stationary support (2) and a flexible roll cover (3) which runs around the support (2) and which is supported by a press shoe (4) which can be pressed against the inner circumferential surface (5) of the roll cover (3) and has a supporting surface (12), in which a supporting area (11) between supporting surface (12) and inner circumferential surface (5) of the roll cover (3) is fed with a fluid lubricant to reduce the friction between press shoe (4) and roll cover (3), there being means by means of which a quantity of fluid lubricant can be fed to the press roll (1) and picks up and transports away a quantity of heat such that the temperature of the roll cover (3) does not exceed a permissible limiting value, for implementing the method according to one of the preceding claims,
**characterized in that** in the press shoe (4), feed ducts (14, 15) for lubricant are provided and/or a spraying device (13) is provided, by means of which lubricant can be sprayed onto the inner circumferential surface (5) of the roll cover (3), and **in that** for each meter of working width and for each 1 m/sec maximum operating speed, between 3 and 5 l of lubricant per minute are fed to the press roll (1), and the lubricant is selected such that the product of its dynamic viscosity η before the feed at a maximum operating speed Vₘₐₓ of the press roll (1) is 1.3 to 2.3 Pa·m.

10. Press roll according to Claim 9, **characterized in that** the spraying device (3) is arranged in the vicinity of the roll-cover outlet side of the supporting area (11).

11. Press roll according to Claim 9 or 10, **characterized in that** a suction device (16) for excess lubricant opens upstream of the roll-cover inlet side of the supporting area (11).

12. Press roll according to one of Claims 9 to 11, **characterized in that** means are provided to lead the extracted lubricant back into the lubricant circuit.

13. Press roll according to Claim 12, **characterized in that** in the lubricant circuit there is a cooling device for the lubricant.

14. Press roll according to Claim 13, **characterized in that** the cooling device permits the lubricant to be cooled to at most 50°C.

## Revendications

1. Procédé pour l'utilisation d'un rouleau de presse (1) avec un support stationnaire (2) et une enveloppe de cylindre (3) flexible tournant autour du support (2), qui est soutenue par un patin de pressage (4) présentant une face d'appui (12) et applicable contre la surface latérale intérieure (5) de l'enveloppe de cylindre (3), dans lequel on apporte dans une zone d'appui (11) entre la face d'appui (12) et la surface latérale intérieure (5) de l'enveloppe de cylindre (3) un lubrifiant fluide en vue de réduire le frottement entre le patin de pressage (4) et l'enveloppe de cylindre (3), dans lequel on choisit une quantité totale de lubrifiant apportée au rouleau de presse telle que la température de l'enveloppe de cylindre (3) ne dépasse pas une valeur limite admissible en raison de la quantité de chaleur cédée au lubrifiant et évacuée par le lubrifiant, **caractérisé en ce que** l'on apporte entre 3 et 5 l de lubrifiant par minute par mètre de largeur de travail et par 1 m/s de vitesse maximale de fonctionnement du rouleau de presse (1) et **en ce que** l'on choisit le lubrifiant de telle manière que le produit de sa viscosité dynamique η avant son apport et une vitesse maximale de fonctionnement Vₘₐₓ du rouleau de presse (1) soit compris entre 1,3 et 2,3 Pa·m.

2. Procédé suivant la revendication 1, **caractérisé en ce que** l'on effectue l'apport de la quantité de lubrifiant nécessaire au moins également par dépôt, en particulier par pulvérisation, sur la surface latérale intérieure (5) de l'enveloppe de cylindre (3).

3. Procédé suivant la revendication 2, **caractérisé en ce que** l'on effectue le dépôt à proximité du côté de sortie de la zone d'appui (11) de l'enveloppe de cylindre.

4. Procédé suivant l'une quelconque des revendications précédentes, **caractérisé en ce que** l'on effectue l'apport de la quantité de lubrifiant nécessaire au moins également par pressage dans la zone d'appui (11) entre la face d'appui (12) du patin de pressage (4) et la surface latérale intérieure (5) de l'enveloppe de cylindre (3) au moyen du patin de pressage (4).

5. Procédé suivant l'une quelconque des revendications précédentes, **caractérisé en ce que** la température du lubrifiant avant son apport vaut au maximum environ 50°C.

6. Procédé suivant l'une quelconque des revendications précédentes, **caractérisé en ce que** l'on refroidit le lubrifiant avant son apport.

7. Procédé suivant l'une quelconque des revendications précédentes, **caractérisé en ce que** l'on évacue le lubrifiant en excès avant la zone d'appui (11).

8. Procédé suivant la revendication 7, **caractérisé en ce que** l'on recycle le lubrifiant évacué pour former un circuit fermé de lubrifiant.

9. Rouleau de presse (1) avec un support stationnaire (2) et une enveloppe de cylindre (3) flexible tournant autour du support (2), qui est soutenue par un patin de pressage (4) présentant une face d'appui (12) et applicable contre la surface latérale intérieure (5) de l'enveloppe de cylindre (3), dans lequel on apporte dans une zone d'appui (11) entre la face d'appui (12) et la surface latérale intérieure (5) de l'enveloppe de cylindre (3) un lubrifiant fluide en vue de réduire le frottement entre le patin de pressage (4) et l'enveloppe de cylindre (3), dans lequel il est prévu des moyens par lesquels on peut apporter au rouleau de presse (1) une quantité de lubrifiant fluide qui extrait et évacue une quantité de chaleur telle que la température de l'enveloppe de cylindre (3) ne dépasse pas une valeur limite admissible, en vue de la mise en oeuvre du procédé suivant l'une quelconque des revendications précédentes, **caractérisé en ce qu'**il est prévu dans le patin de pressage (4) des canaux d'arrivée (14, 15) pour le lubrifiant et/ou il est prévu un dispositif de pulvérisation (13), par lequel le lubrifiant peut être pulvérisé sur la surface latérale intérieure (5) de l'enveloppe de cylindre (3), et **en ce que** l'on peut apporter entre 3 et 5 l de lubrifiant par minute par mètre de largeur de travail et par 1 m/s de vitesse maximale de fonctionnement du rouleau de presse (1) et **en ce que** le lubrifiant est choisi de telle manière que le produit de sa viscosité dynamique η avant son apport et une vitesse maximale de fonctionnement Vₘₐₓ du rouleau de presse (1) soit compris entre 1,3 et 2,3 Pa·m.

10. Rouleau de presse suivant la revendication 9, **caractérisé en ce que** le dispositif de pulvérisation (13) est disposé à proximité du côté de sortie de la zone d'appui (11) de l'enveloppe de cylindre.

11. Rouleau de presse suivant la revendication 9 ou 10, **caractérisé en ce qu'**un dispositif d'aspiration (16) pour le lubrifiant en excès débouche avant le côté d'entrée de la zone d'appui (11) de l'enveloppe de cylindre.

12. Rouleau de presse suivant l'une quelconque des revendications 9 à 11, **caractérisé en ce qu'**il est prévu des moyens pour le recyclage du lubrifiant aspiré dans le circuit de lubrifiant.

13. Rouleau de presse suivant la revendication 12, **caractérisé en ce qu'**un dispositif de refroidissement pour le lubrifiant est prévu dans le circuit de lubrifiant.

14. Rouleau de presse suivant la revendication 13, **caractérisé en ce que** le dispositif de refroidissement permet un refroidissement du lubrifiant à 50°C au maximum.
